# EUROPÄISCHE PATENTSCHRIFT

(11) **EP 3 258 230 B1**
(45) Veröffentlichungstag und Bekanntmachung des Hinweises auf die Patenterteilung: **13.11.2019**
(21) Anmeldenummer: 16174251.5
(22) Anmeldetag: 13.06.2016
(51) Int. Cl.: G01K 1/02

(54) **SENSORHAUT MIT TEMPERATURSENSORIK**
SENSOR SKIN WITH TEMPERATURE SENSOR SYSTEM
PEAU SENSORIELLE AVEC SONDE DE TEMPERATURE

(43) Veröffentlichungstag der Anmeldung: 20.12.2017
(73) Patentinhaber: Airbus Defence and Space GmbH, 82024 Taufkirchen (DE)
(72) Erfinder: Friedberger, Alois, 85667 Oberpframmern (DE); Helwig, Andreas, 80469 München (DE)
(74) Vertreter: Isarpatent

(56) Entgegenhaltungen:
- WO-A1-2008/090348

## Beschreibung

Die Erfindung betrifft eine Messanordnung zur Schadensermittlung an Bauteilen aus wenigstens einem faserverstärkten Kunststoff, mit einer Mehrzahl von Temperatursensoren, die an einem Bauteil voneinander beabstandet anordenbar oder angeordnet sind. Das Bauteil kann etwa ein Bestandteil eines Luft- oder Raumfahrzeugs sein.

Bei aller Entwicklung im Flugzeugbau hin zu leichteren und sichereren Luftfahrzeugen ist immer auch die Überwachung der strukturellen Integrität (SHM) ein wesentliches Feld, die im Wesentlichen zum Ziel hat, Schäden an Strukturen zu überwachen und wahrzunehmen. Die Schadensentdeckung und ihre Schweregradmessung sind kritische Merkmale für anschließende Entscheidungsfindungen. Hierbei fordert die Entwicklung von auf anderen als metallischen Materialien beruhenden Strukturen veränderte Methoden von Überwachung und Schadendetektion.

Da vermehrt Teile von Luft- oder Raumfahrzeugen aus faserverstärkten Kunststoffen ausgelegt wurden, mussten Ansätze zur Beurteilung von Schäden an solchen Strukturen entwickelt werden, unter diesen sind unter anderem Ultraschallmessmethoden, Thermographie, elektrische Potentialmessungen und vibrationsbasierte Untersuchungen zu nennen. Im Zusammenhang mit Überwachung kennt man zur Steuerung der Temperatur bei der Herstellung von Verbundwerkstoffen mittels an dem Formwerkzeug angeordneter Temperatursensoren die WO 2008/090348 A1. Die bekannten Methoden sind dabei insbesondere wegen der Dimensionen der Luft- und Raumfahrzeuge mit nicht unerheblichem Kostenaufwand verbunden und in der Regel nicht zur Überwachung während des Betriebs, sondern lediglich zur Überwachung in Wartungsintervallen geeignet.

Eine weitere Methode schlägt dabei für faserverstärkte Kunststoffe (CFRPs) eine thermische Verhaltensanalyse vor, die deswegen vielversprechend erscheint, weil kostengünstiger erfasst werden könnte, wie äußere Einflüsse beispielsweise auf die Qualität der Hitzeausbreitung im Material einwirken können und hieraus Schadensaussagen ableitbar wären. Eine Einbringung vom Thermofühlern in die Matrix des Kunststoffs des betreffenden Bauteils während einer Wartung/Inspektion macht jedoch das Bauteil im Prinzip unbrauchbar, außerdem ließen sich hiermit keine Daten aus dem Betrieb des Bauteils gewinnen.

Schließlich wäre es wünschenswert, Aussagen über den Herstellungsprozess des Bauteils aus Kunststoff treffen zu können, ohne hierfür einen weiteren kostenintensiven Testaufbau vorhalten zu müssen.

Es ist daher die Aufgabe der vorliegenden Erfindung, eine Messanordnung zur Verfügung zu stellen, mit welcher kostengünstig Temperaturdaten während Herstellung und Betrieb eines Bauteils gewonnen und auf diese Weise Schäden an dem Bauteil erfasst und überwacht werden können.

Diese Aufgabe wird erfindungsgemäß durch die kennzeichnenden Merkmale des Anspruchs 1 gelöst. Die Lösung besteht demnach insbesondere darin, mit den Temperatursensoren oder -transducern an dem Bauteil wenigstens ein Sensorarray bilden, dass mittels des wenigstens einen Sensorarrays eine Änderung thermischer Materialeigenschaften detektierbar ist und dass die Messanordnung als Messgröße eine zeitabhängige Temperaturverteilung und/oder eine Maximalverteilung der Temperatur bei Einbringung einer Temperaturlast an dem Bauteil erfasst, so dass die Intensität der Messgröße eine Schadensgröße an dem Bauteil und die örtliche Auflösung des wenigstens einen Sensorarrays die Lokalisierung des Schadens widerspiegelt. Die Erfindung besteht also insbesondere in der Möglichkeit mittels der Mehrzahl von Temperatursensoren nicht lediglich die Temperatur an ausgewählten Punkten des Bauteils zu messen, sondern vielmehr Delaminationen und Schäden in der Struktur durch eine Veränderung der thermischen Eigenschaften des Materials zu detektieren, und zwar, wie weiter unten zu sehen sein wird, insbesondere von dessen thermischer Leitfähigkeit bzw. der Temperaturverteilung im Bauteil. Dies macht sich unter anderem die gute Wärmeleitfähigkeit von faserverstärkten Kunststoffen (CFRPs) zunutze. Hierfür kann auch eine Mehrzahl von Sensorarrays vorgesehen sein.

Die Detektion eines Schadens an der Bauteilstruktur wird dabei über das Sensorarray an der Sensorhaut detektiert. Eine Veränderung der Umgebungstemperatur bzw. das Einbringen von Temperaturlasten führt zunächst ganz allgemein zu einer Verteilung der Temperaturlast gemäß den thermischen Eigenschaften des Bauteils. Ein Schaden im Bauteil, beispielsweise verursacht durch ein bereits erwähntes, sogenanntes Impact-Ereignis, führt zu einer Veränderung der Fähigkeit die genannten Temperaturlasten weiterzuleiten bzw. über die Struktur des Bauteils zu verteilen. In einer vorteilhaften Ausführung ist daher vorgesehen, dass die erfindungsgemäße Messanordnung eine zeitabhängige Temperaturverteilung und/oder eine Maximalverteilung der Temperatur bei Einbringung einer Temperaturlast an dem Bauteil erfasst und gegebenenfalls auswertet. Die Größe des Schadens wird sich hierbei in der Intensität der Messgröße widerspiegeln, während die örtliche Auflösung über das Sensorarray realisiert wird. Die Sensordichte der Anordnung wird dabei wesentlich durch die Größe einer als relevant angesehenen Schädigung bestimmt.

Weitere vorteilhafte Merkmale beinhalten die Unteransprüche.

Bei einer vorteilhaften Ausführung der erfindungsgemäßen Messanordnung, die eine Vielzahl unterschiedlicher Möglichkeiten der Anordnung für die Mehrzahl von Temperatursensoren in einem Sensorarray an dem Bauteil biete, wird eine Mehrzahl von Temperatursensoren an einem flexiblen Substrat, etwa einer geeigneten Folie, angeordnet und bereits bei der Herstellung an dem Bauteil integriert. Auf diese Weise wird quasi dem Bauteil eine zusätzliche Fähigkeit verliehen, nämlich diejenige, mit vertretbarem Aufwand, kostengünstig und zuverlässig sowohl Temperaturwerte und Prozessparameter während deren Herstellung, als auch der Einfluss von potentiell schädlichen Ereignissen auf deren strukturelle Integrität im Betrieb im Grunde selbst zu überwachen, so dass die entsprechenden Daten prinzipiell jederzeit zur Verfügung stehen. Dabei bildet das mit den Temperatursensoren versehene flexible Substrat eine Art Sensorhaut.

In einer vorteilhaften Ausführung kann die Sensorhaut mit dem flexiblen Substrat zum einen an einer Bauteiloberfläche angeordnet sein, andererseits kann sie auch während eines Fügeprozesses des betreffenden Bauteils bei stoffschlüssiger Verbindung zweier Strukturelemente in das Innere der Matrix eingebunden worden sein, so dass mit den Sensoren auch Werte aus dem Inneren des Bauteil gewinnbar sind.

Zweckmäßiger Weise kann in einer haltbaren Ausführung der Messanordnung dabei das flexible Substrat bei der Herstellung des Bauteils mit dessen Matrix auch selbst eine stoffschlüssige Verbindung eingehen.

Um auch an nicht ebenen Strukturen des Bauteils in dessen Innerem oder an dessen Oberfläche Werte einer Temperaturverteilung gewinnen zu können und auch räumlich komplexere Strukturen dahingehend vermessen zu können, kann bei einer anderen Ausführung der erfindungsgemäßen Messanordnung das flexible Substrat in Gebrauchsstellung eine gekrümmte Fläche an dem Bauteil einnehmen oder überdecken.

Um mit den an dem flexiblen Substrat angeordneten Temperatursensoren bei der Schadendetektion so etwas wie eine Ortsauflösung zu erhalten, kann eine weiter Ausführung der Messanordnung vorsehen, die Mehrzahl von Sensoren an dem flexiblen Substrat zu verteilen und hierbei insbesondere gleich zu verteilen. Dabei können die Sensoren etwa eine Art Netz mit Vermaschung benachbarter Sensoren bilden, die in Maßen auch eine Erstreckung in eine Richtung senkrecht zur flächigen Erstreckung des flexiblen Substrats gestattet.

Um die Entwicklung von Temperaturverteilungen, und damit eines eventuell bereits unbemerkt eingetretenen Schadens an einer Bauteilstruktur zu willkürlichen Zeitpunkten beurteilen zu können, kann eine zweckmäßige Weiterbildung der Messanordnung mit einer Heizeinrichtung mit wenigstens einem Heizelement versehen sein, so dass ein Wärmeeintrag in die Struktur jederzeit möglich ist. In verschiedenen Szenarien, die beispielsweise von dem gewünschten Grad an Genauigkeit der Detektion abhängig gemacht werden können, kann hierbei zweckmäßiger Weise jeder Gruppe von Temperatursensoren wenigstens ein Heizelement zugeordnet sein oder jedem Temperatursensor ein Heizelement zugeordnet sein. Es kann aber auch jeder Temperatursensor ein eigenes Heizelement aufweisen und/oder die Anzahl von Heizelementen der Heizeinrichtung von derjenigen der Temperatursensoren unabhängig sein.

Bei zweckmäßigen Weiterbildungen der Messanordnung können eigenständige Heizelementen an dem gleichen flexiblen Substrat wie die Temperatursensoren angeordnet sein oder die Heizelemente und die Temperatursensoren an verschiedenen flexiblen Substraten, die mit dem Bauteil bei dessen Herstellung verbunden werden, angeordnet sein. Es ist beispielsweise denkbar, die Temperatursensoren und die Heizelemente jeweils an eigenständigen Substraten anzuordnen und diese wiederum mit zwei einander abgewandten Flächen eines gegebenenfalls sehr dünnen Bauteils zu verbinden. Auf diese Weise kann man jede dieser Flächen für sich jeweils mit einer Sensorhaut versehen, Sensorhaut muss hier in einem größeren Zusammenhang verstanden werden, da es, wie weiter unten noch erwähnt, prinzipiell möglich ist, Sensoren auch zum Heizen zu verwenden.

Eine andere vorteilhafte Ausbildung der Messanordnung, die eine flexible Anordnung von Heizeinrichtung und Temperatursensoren gestattet, kann vorsehen, die Heizeinrichtung mit dem wenigstens einen Heizelement und die Mehrzahl von Temperatursensoren, insbesondere das Sensorarray, an einer gemeinsamen Seite oder Fläche des Bauteils oder an voneinander verschiedenen Seiten bzw. Flächen anzuordnen.

Um die mittels der Messanordnung gewonnenen Temperaturdaten unmittelbar und ohne Umwege auswerten zu können, kann bei einer vorteilhaften Weiterbildung die erfindungsgemäße Messanordnung mit wenigstens einer Steuer- und Auswerteeinrichtung versehen sein. Dies kann mit Vorteil insbesondere dazu eingesetzt werden, Heizereignisse zu planen, zu initiieren und die Heizelemente und die Temperatursensoren zu steuern. Dabei können beispielsweise auch gezielt bestimmte mit Temperatursensoren und/oder Heizelementen versehene Bereiche oder einzelne Temperatursensoren /Heizelemente an dem Bauteil isoliert angesteuert werden. Beispielsweise können auch bei einem möglichen Versagen von Temperatursensoren durch vorherige Strukturschädigung (bspw. durch ein sogenanntes Impact-Ereignis), die Aufgabe ausgefallener Temperatursensoren durch noch funktionstüchtige übernommen werden, auch diese Verteilung/Steuerung kann durch die Steuer- und Auswerteeinrichtung übernommen werden. Der Steuer- und Auswerteeinrichtung kann auch wenigstens ein Speichermittel zugeordnet sein, mit welchem beispielsweise Steuerparameter, Mess- und/oder Auswerteergebnisse für eine Weiterverarbeitung abgelegt und abrufbar vorgehalten werden können.

Besonders bevorzugt kann eine solche Steuer- und die Auswerteeinrichtung bei einer Weiterbildung der erfindungsgemäßen Messanordnung an dem jeweiligen flexiblen Substrat integriert sein.

Zweckmäßigerweise sind in einer Weiterbildung mit der erfindungsgemäßen Messanordnung verschiedene Messmethoden durchführbar, insbesondere wenigstens eine aktive und/oder eine passive Messmethode. Diese können gegebenenfalls in einer Messsituation gleichzeitig mit unterschiedlichen Sensorgesamtheiten, nacheinander immer noch in der gleichen Messsituation oder auch in unterschiedlichen Messsituation vollständig selbstständig voneinander durchgeführt werden. Es sind auch andere durchführbare Messmethoden denkbar.

Bevorzugt kann eine aktive Messmethode, die die erfindungsgemäße Messanordnung ausführt, darin bestehen, dass im Flugbetrieb oder auch im sonstigen Betrieb eine thermische Belastung über Heizelemente in die Bauteilstruktur eingebracht wird, das Bauteil also willkürlich einer thermischen Belastung ausgesetzt wird und anschließend beispielsweise die Entwicklung der Temperaturverteilung betrachtet wird.

In einer anderen bevorzugten Variante kann die erfindungsgemäße Messanordnung eine passive Messmethode beispielsweise dadurch ausführen, dass die Temperaturunterschiede von Erdoberflache (bspw. 20°C auf einem Flugfeld) zur Operationsflughöhe (bspw. bis zu minus 80°C bei einer Operationsflughöhe von bis zu 20km) ausgenutzt werden, um einen Temperaturgradienten zu erzeugen. Der Gradient tritt dabei wohl beim Steig-, wie auch beim Sinkflug auf, wobei die Temperatursensoren dem Gradienten nachlaufen und bereits der Vergleich von Signalen einzelner Sensoren bei Auftreten von Differenzen erste Einschätzungen hinsichtlich des Vorliegens eines Schadens gestattet.

Um Heizelemente in vorteilhafter Weise an dem flexiblen Substrat integrieren zu können, können bei einer Weiterbildung der Messanordnung die Heizelemente beispielsweise als mikromechanische Systeme, sogenannte Mikroheizer, ausgebildet sein, es sind aber auch andere Ausbildungen möglich, weiter können etwa bei entsprechender richtiger Dimensionierung die Temperatursensoren jeweils auch als Heizelement eingesetzt werden.

Eine zuverlässige Anordnung an dem jeweiligen Bauteil gelingt mit einem flexiblen Substrat, bei welchem der faserverstärkte Kunststoff ein thermoplastischer Hochleistungskunststoff ist, welcher aus einem Polyimid, insbesondere Polyetherimid, oder einem Polysulfon, insbesondere Polyethersulfon, gebildet ist. Diese bilden jeweils geeignete Folienmaterialien, die bei dem jeweiligen Herstellungsprozess zuverlässig an die Kunststoffmatrix des Bauteils anbinden und an diesem eine Art Sensorhaut bilden.

Metallische Leiterbahnen für Heizelemente und Temperatursensoren können auch eine Störung der Bauteilmatrix darstellen. Um hierdurch die mechanischen Eigenschaften des Verbundaufbaus nicht zu beeinträchtigen kann eine Weiterbildung der Messanordnung darin bestehen, wenigstens eines oder mehrere oder alle Heizelemente der Heizeinrichtung und/oder wenigstens einen oder mehrere oder alle Temperatursensoren jeweils als leitfähiges Polymer auszubilden. Diese kann jeweils in das flexible Substrat eingebunden werden oder diese sogar selbst bilden.

Eine bevorzugte Ausführung kann beispielsweise darin bestehen, das flexible Substrat und/oder eine anderweitige Trägerfolie unterschiedlich zu dotieren oder anderweitig zu bearbeiten. Hierfür kann etwa eine leitfähige Folie verwendet werden und deren Leitfähigkeit an entsprechenden Stellen gestört werden, um dadurch die gewünschten Leiterbahnen zu erzeugen.

In einer vorteilhaften Verwendung der Messanordnung können die Heizelemente der Heizeinrichtung unabhängig von ihrer Auslegung zusätzlich zum Anti-Icing eingesetzt werden, um einer Vereisung von Bauteilen, zum Beispiel an einer Tragfläche, etwa durch Witterungseinfluss oder bedingt durch die Operationshöhe des Luftfahrzeugs unterstützend vorzubeugen, entgegenzuwirken oder abzuhelfen.

Die obigen Ausgestaltungen und Weiterbildungen lassen sich, sofern sinnvoll, beliebig miteinander kombinieren. Insbesondere ist es beispielsweise auch denkbar, durch Anordnung einer Mehrzahl von Sensorhäuten eine erhöhte Ortsauflösung zu schaffen. Weiter könne auch zusätzliche, andere Parameter erfassende Sensoren bspw. für Druck oder eine kapazitive Erfassung des Vernetzungsgrads des Polymers des Bauteils vorgesehen sein. Diese schaffen nicht lediglich Redundanz, erhöhen aber sehr wohl gegebenenfalls die Zuverlässigkeit von Schadensbeurteilungen. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu derjeweiligen Grundform der vorliegenden Erfindung hinzufügen.

Die Erfindung wird nachstehend anhand von Ausführungsbeispielen in der Zeichnung näher erläutert. In teilweise schematisierter Darstellung zeigen hierbei die
- Fig.1: eine geschnittene ebene Seitenansicht eines ersten Ausführungsbeispiels der Messanordnung mit zwei an gegenüberliegenden Seiten eines flachen Bauteils angeordneten Substraten, die mit Sensoren bzw. Heizelementen versehen sind;
- Fig.2: eine ebene Seitenansicht eines Bauteils mit einer Messanordnung aus der Fig.1, bei welcher an dem Bauteil ein Schadensereignis eintritt, der durch Aufheizen eines der Heizelemente detektiert werden soll.
- Fig.3: Graph einer aufgrund des Ereignisses an dem Bauteil in der Fig.2 aufgezeichneten Temperaturverteilung.

In allen Figuren sind gleiche bzw. funktionsgleiche Elemente und Vorrichtungen - sofern nichts Anderes angegeben ist - mit denselben Bezugszeichen versehen worden.

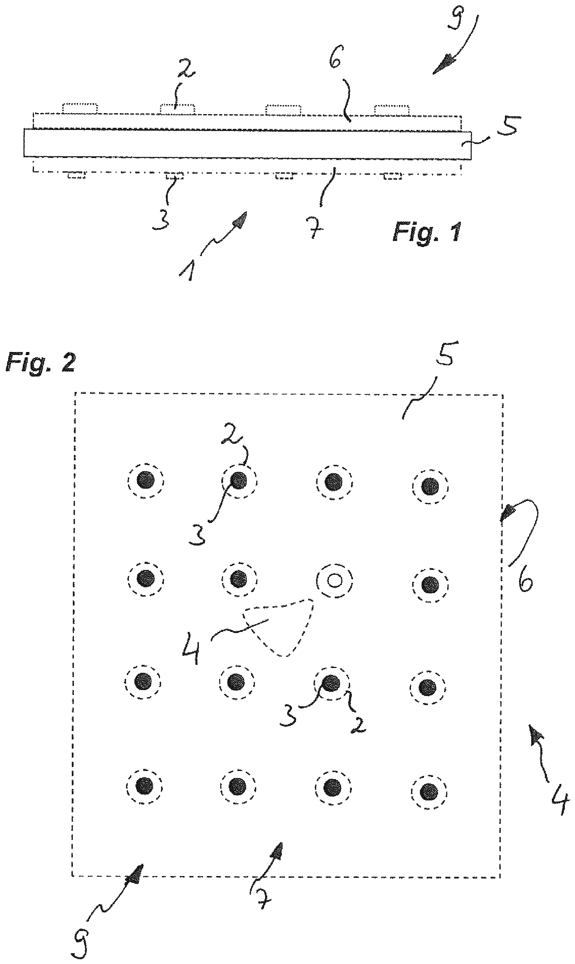

In den Fig.1 und 2 erkennt man eine im Ganzen mit 1 bezeichnete MessAnordnung zur Schadensermittlung an Bauteilen 5 aus wenigstens einem faserverstärkten Kunststoff, mit einer Mehrzahl von Temperatursensoren 2 bzw. - transducern, die an dem betreffenden hier ebenen Abschnitt eines Bauteils (5) voneinander beabstandet angeordnet sind.

In der geschnittenen Ansicht der Fig.1 ist hierzu in der Mitte ein Bauteil 5 dargestellt, an dessen Flachseiten jeweils ein flexibles Substrat 6, 7 angeordnet ist. An dem an der für den Betrachter oberen Flachseite des Bauteils 5 angeordneten folienartigen Substrat 6 sind Temperatursensoren aufgebracht und durch das Substrat mit dem Bauteil 5 verbunden. Gleiches gilt für das an der Unterseite angeordnete flexible Substrat 7, mittels dessen Heizelemente 3 mit dem Bauteil verbunden sind. Beide Substrate 6, 7 gehen bei der Herstellung des Bauteils 5 mit dessen Matrix eine stoffschlüssige Verbindung ein. Bei dem Bauteil 5 in der Fig.1 ist dabei jedem Temperatursensor 2 des einen Substrats 6 ein Heizelement 3 des anderen Substrats 7 zugeordnet, ohne dass diese Zuordnung einen Einfluss auf die Auswertung haben muss.

Hierzu erkennt man die aus der Fig.1 bekannte Messanordnung 1 in einer ebenen Ansicht, bei der die Flachseite mit den an dem Substrat 7 angeordneten Heizelementen 3 dem Betrachter zugewandt ist. Beginnt man die dargestellten 16 Sensoren 2 und Heizelemente 3 ab der Position oben links mit führender Reihe und folgender Spalte durchzuzählen, erkennt man, dass das Heizelement der Position 2/3 beheizt ist, um eine thermische Last auf die Struktur des Bauteils 5 aufzubringen, wodurch die Delamination 4 als Schadensereignis detektierbar ist. Zur Detektion können hierbei alle 16 dargestellten Temperatursensoren der Positionen 1/1 bis 4/4 eingesetzt werden. Über die Sensoren 2, die an ihrem Substrat (wie im übrigen die Heizelemente 3 auch) ein Netz 9 bilden, kann eine Temperaturverteilung an dem flexiblen Substrat 6 erfasst und ausgewertet werden.

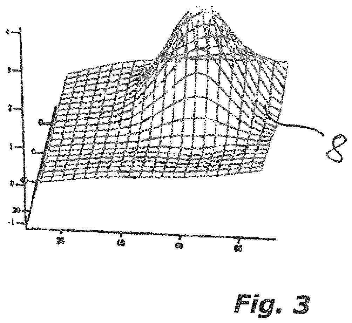

Das Ergebnis einer solchen Auswertung zeigt der Graph der Fig.3, in welcher eine Temperaturverteilung (8) dargestellt ist, die sich bei dem Schadensereignis der Fig.2 mit der Auswertung durch alle dort dargestellten Sensoren 2 ergibt. In dem dreidimensionalen Graph der Temperaturverteilung 8 ist hierbei beispielhaft eine maximale Temperaturabweichung von einem Soll- bzw. Referenzwert über der räumlichen, zweidimensionalen Erstreckung des Sensorarrays 9 in im Prinzip willkürlichen Einheiten aufgetragen, wodurch die Detektion der Delamination 4 aus der Fig.2 gut ersichtlich wird.

Dementsprechend betrifft also die vorstehend beschriebene Erfindung eine Messanordnung 1 zur Schadensermittlung an Bauteilen 5 aus wenigstens einem faserverstärkten Kunststoff mit einer Mehrzahl von Temperatursensoren 2, die an einem Bauteil 5 voneinander beabstandet anordenbar oder angeordnet sind. Um eine Messanordnung 1 zur Verfügung zu haben, mit welcher kostengünstig Temperaturdaten während Herstellung und Betrieb eines Bauteils 5 gewonnen und auf diese Weise Schäden an dem Bauteil 5 erfasst und überwacht werden können, sind die Temperatursensoren 2 an wenigstens einem flexiblen Substrat 6 angeordnet und das flexible Substrat 6 geht bei der Herstellung des Bauteils 6 mit dessen Matrix eine stoffschlüssige Verbindung ein.

Hierdurch wird eine Messanordnung 1 etabliert, mit der eine Prozessüberwachung der Herstellung von CFK-Bauteilen 5 genauso wie deren Überwachung und Schadensdetektion im Betrieb stattfinden kann, so dass auf separate Systeme in diesem Zusammenhang verzichtet werden kann. Hierzu wird eine Folie als flexibles Substrat 6 mit sehr hoher Dichte an Sensoren 2 /Transducern und integrierter Elektronikfunktionalität vorgesehen, die am zu überwachenden Bauteil 5 integriert wird. Hierdurch entsteht ein einziges System für Prozessüberwachung und Schadendetektion, das dank integrierter Elektronik ohne Verkabelungsaufwand auskommt und eine einfache Signalauswertung und Schadenslokalisation durch aktive und passive Temperaturmessung gestattet, wobei diese im Prinzip jederzeit, also auch sogenannt *"inflight"* stattfinden kann.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 1: Messanordnung
- 2: Temperatursensor / -transducer
- 3: Heizelement
- 4: Delamination
- 5: Bauteil (CFRP)
- 6: flexibles Substrat für Temperatursensoren
- 7: flexibles Substrat für Heizelemente
- 8: Temperaturverteilung
- 9: Sensorarray

## Patentansprüche

1. Messanordnung (1) zur Schadensermittlung an Bauteilen aus wenigstens einem faserverstärkten Kunststoff, mit einer Mehrzahl von Temperatursensoren (2), die an einem Bauteil (5) voneinander beabstandet anordenbar oder angeordnet sind wobei die Mehrzahl von Temperatursensoren (2) an dem Bauteil (5) wenigstens ein Sensorarray (9) bilden, wobei mittels des wenigstens einen Sensorarrays (9) eine Änderung thermischer Materialeigenschaften des Bauteils (5) detektierbar ist, **dadurch gekennzeichnet, dass** die Messanordnung (1) als Messgröße eine zeitabhängige Temperaturverteilung und/oder eine Maximalverteilung (8) der Temperatur bei Einbringung einer Temperaturlast an dem Bauteil (5) erfasst, so dass die Intensität der Messgröße eine Schadensgröße an dem Bauteil (5) und die örtliche Auflösung des wenigstens einen Sensorarrays (9) die Lokalisierung des Schadens widerspiegelt.

2. Messanordnung nach Anspruch 1, **dadurch gekennzeichnet, dass** die Mehrzahl von Temperatursensoren (2) an wenigstens einem flexiblen Substrat (6) angeordnet sind.

3. Messanordnung nach Anspruch 2, **dadurch gekennzeichnet, dass** das flexible Substrat (6) im Innern des Bauteils (5) oder an dessen Oberfläche angeordnet ist.

4. Messanordnung nach einem der Ansprüche 2 und 3, **dadurch gekennzeichnet, dass** das flexible Substrat (22) bei der Herstellung des Bauteils (5) mit dessen Matrix eine stoffschlüssige Verbindung eingeht.

5. Messanordnung nach einem der Ansprüche 2 bis 4, **dadurch gekennzeichnet, dass** das flexible Substrat (6) in Gebrauchsstellung eine gekrümmte Fläche an dem Bauteil (5) einnimmt oder überdeckt.

6. Messanordnung nach einem der Ansprüche 2 bis 5, **dadurch gekennzeichnet, dass** die Mehrzahl von Temperatursensoren (2) an dem flexiblen Substrat (6) verteilt sind, insbesondere gleichverteilt sind.

7. Messanordnung nach einem der vorhergehenden Ansprüche, **dadurch gekennzeichnet, dass** die Messanordnung (1) mit einer Heizeinrichtung mit wenigstens einem Heizelement (3) versehen ist, wobei jeder Gruppe von Temperatursensoren (2) wenigstens ein Heizelement (3) zugeordnet ist, jedem Temperatursensor (2) ein Heizelement (3) zugeordnet ist, jeder Temperatursensor (2) ein eigenes Heizelement (3) aufweist und/oder die Anzahl von Heizelementen (3) der Heizeinrichtung von derjenigen der Temperatursensoren (2) unabhängig ist.

8. Messanordnung nach Anspruch 7, wenn auf Anspruch 2 rückbezogen, **dadurch gekennzeichnet, dass** die Heizelemente (3) der Heizeinrichtung an dem gleichen flexiblen Substrat wie die Temperatursensoren (2) angeordnet sind oder die Heizelemente (3) und die Temperatursensoren (2) an verschiedenen flexiblen Substraten, die mit dem Bauteil (5) bei dessen Herstellung verbunden werden, angeordnet sind.

9. Messanordnung nach Anspruch 7 oder 8, wobei die Heizeinrichtung mit dem wenigstens einen Heizelement (3) und die Mehrzahl von Temperatursensoren (2), insbesondere das Sensorarray (9), an einer gemeinsamen Seite oder Fläche des Bauteils (5) angeordnet sind.

10. Messanordnung nach Anspruch 7 oder 8, wobei die Heizeinrichtung mit dem wenigstens einen Heizelement (3) und die Mehrzahl von Temperatursensoren (2), insbesondere das Sensorarray (9), an voneinander verschiedenen Seiten bzw. Flächen angeordnet sind.

11. Messanordnung nach einem der vorhergehenden Ansprüche, **dadurch gekennzeichnet, dass** die Messanordnung (1) mit einer Steuer- und Auswerteeinrichtung versehen ist.

12. Messanordnung nach Anspruch 11, wenn auf Anspruch 2 rückbezogen, **dadurch gekennzeichnet, dass** die Steuer- und Auswerteeinrichtung der Messanordnung (1) an dem flexiblen Substrat integriert ist.

13. Messanordnung nach einem der Ansprüche 7 bis 12 **dadurch gekennzeichnet, dass** die Heizelemente (3) der Heizeinrichtung als Mikroheizer ausgebildet sind.

14. Messanordnung nach einem der vorhergehenden Ansprüche, **dadurch gekennzeichnet, dass** die Temperatursensoren (2) jeweils als Heizelement einsetzbar oder eingesetzt sind.

15. Messanordnung nach einem der vorhergehenden Ansprüche, **dadurch gekennzeichnet, dass** der faserverstärkten Kunststoff ein thermoplastischer Hochleistungskunststoff ist, welcher aus einem Polyimid, insbesondere Polyetherimid, oder einem Polysulfon, insbesondere Polyethersulfon, gebildet ist.

16. Messanordnung nach einem der vorhergehenden Ansprüche, **dadurch gekennzeichnet, dass** wenigstens einer, mehrere oder alle Temperatursensoren (2) und/oder wenigstens einer, mehrere oder alle Heizelemente (3) jeweils als ein leitfähiges Polymer ausgebildet sind und/oder das jeweilige flexible Substrat (6, 7) und/oder eine anderweitige Trägerfolie unterschiedlich dotiert oder anderweitig bearbeitet ist.

17. Verwendung einer Messanordnung (1) nach einem der Ansprüche 7 bis 10, **dadurch gekennzeichnet, dass** die Heizelemente (3) der Heizeinrichtung unabhängig von ihrer Auslegung zusätzlich zum Anti-Icing beim Betrieb des Bauteils (5) eingesetzt werden.

## Claims

1. Measurement arrangement (1) for determining damage to components of at least one fibre-reinforced plastic, with a plurality of temperature sensors (2), which can be arranged or are arranged at a distance from one another on a component (5), wherein the plurality of temperature sensors (2) on the component (5) form at least one sensor array (9), wherein a change in the thermal material properties of the component (5) can be detected by means of the at least one sensor array (9), **characterized in that** the measurement arrangement (1) records as a measured variable a time-dependent temperature distribution and/or a maximum distribution (8) of the temperature when a temperature load is introduced to the component (5), so that the intensity of the measured variable reflects an extent of damage to the component (5) and the spatial resolution of the at least one sensor array (9) reflects the localization of the damage.

2. Measurement arrangement according to Claim 1, **characterized in that** the plurality of temperature sensors (2) are arranged on at least one flexible substrate (6).

3. Measurement arrangement according to Claim 2, **characterized in that** the flexible substrate (6) is arranged inside the component (5) or on the surface thereof.

4. Measurement arrangement according to either of Claims 2 and 3, **characterized in that** during the production of the component (5) the flexible substrate (22) enters into a material bond with the matrix thereof.

5. Measurement arrangement according to one of Claims 2 to 4, **characterized in that**, in the position for use, the flexible substrate (6) occupies or covers a curved surface on the component (5).

6. Measurement arrangement according to one of Claims 2 to 5, **characterized in that** the plurality of temperature sensors (2) are distributed over the flexible substrate (6), in particular are evenly distributed.

7. Measurement arrangement according to one of the preceding claims, **characterized in that** the measurement arrangement (1) is provided with a heating device with at least one heating element (3), wherein each group of temperature sensors (2) is assigned at least one heating element (3), each temperature sensor (2) is assigned a heating element (3), each temperature sensor (2) has a heating element (3) of its own and/or the number of heating elements (3) of the heating device is independent of the number of temperature sensors (2).

8. Measurement arrangement according to Claim 7, if referred back to Claim 2, **characterized in that** the heating elements (3) of the heating device are arranged on the same flexible substrate as the temperature sensors (2) or the heating elements (3) and the temperature sensors (2) are arranged on different flexible substrates that are connected to the component (5) when it is produced.

9. Measurement arrangement according to Claim 7 or 8, wherein the heating device with the at least one heating element (3) and the plurality of temperature sensors (2), in particular the sensor array (9), are arranged on one and the same side or surface of the component (5).

10. Measurement arrangement according to Claim 7 or 8, wherein the heating device with the at least one heating element (3) and the plurality of temperature sensors (2), in particular the sensor array (9), are arranged on different sides or surfaces from one another.

11. Measurement arrangement to one of the preceding claims, **characterized in that** the measurement arrangement (1) is provided with a control and evaluation device.

12. Measurement arrangement according to Claim 11, if referred back to Claim 2, **characterized in that** the control and evaluation device of the measurement arrangement (1) is integrated on the flexible substrate.

13. Measurement arrangement according to one of Claims 7 to 12, **characterized in that** the heating elements (3) of the heating device are formed as microheaters.

14. Measurement arrangement according to one of the preceding claims, **characterized in that** the temperature sensors (2) can each be used or are used as a heating element.

15. Measurement arrangement according to one of the preceding claims, **characterized in that** the fibre-reinforced plastic is a thermoplastic high-performance plastic, which is formed from a polyimide, in particular polyetherimide, or a polysulfone, in particular polyethersulfone.

16. Measurement arrangement according to one of the preceding claims, **characterized in that** at least one, some or all of the temperature sensors (2) and/or at least one, some or all of the heating elements (3) are each formed as a conductive polymer and the respective flexible substrate (6, 7) and/or some other carrier film are differently doped or processed in some other way.

17. Use of a measurement arrangement (1) according to one of Claims 7 to 10, **characterized in that**, irrespective of their design, the heating elements (3) of the heating device are additionally used for anti-icing during the operation of the component (5).

## Revendications

1. Dispositif de mesure (1) destiné à la détermination d'endommagement au niveau de composants formés d'au moins une matière synthétique renforcée par des fibres, le dispositif comprenant une pluralité de capteurs de température (2) qui sont disposés ou peuvent être disposés sur un composant (5) à distance les uns des autres, la pluralité de capteurs de température (2) sur le composant (5) formant au moins un réseau de capteurs (9), un changement des propriétés du matériau thermique du composant (5) pouvant être détecté au moyen d'au moins un réseau de capteurs (9), **caractérisé en ce que** le dispositif de mesure (1) détecte comme grandeur de mesure une distribution de température en fonction du temps et/ou une distribution maximale (8) de la température lors de l'introduction d'une charge thermique au niveau du composant (5) de sorte que l'intensité de la grandeur de mesure reflète l'ampleur d'endommagement au niveau du composant (5) et la résolution locale de l'au moins un réseau de capteurs (9) reflète la localisation de l'endommagement.

2. Dispositif de mesure selon la revendication 1, **caractérisé en ce que** la pluralité de capteurs de température (2) sont disposés sur au moins un substrat flexible (6).

3. Dispositif de mesure selon la revendication 2, **caractérisé en ce que** le substrat flexible (6) est disposé à l'intérieur du composant (5) ou à la surface de celui-ci.

4. Dispositif de mesure selon l'une des revendications 2 et 3, **caractérisé en ce que**, lors de la fabrication du composant (5), le substrat flexible (22) établit une liaison par complémentarité avec la matrice du composant.

5. Dispositif de mesure selon l'une des revendications 2 à 4, **caractérisé en ce que**, en position d'utilisation, le substrat flexible (6) occupe ou recouvre une surface incurvée au niveau du composant (5) .

6. Dispositif de mesure selon l'une des revendications 2 à 5, **caractérisé en ce que** la pluralité de capteurs de température (2) sont répartis, notamment uniformément répartis, sur le substrat flexible (6).

7. Dispositif de mesure selon l'une des revendications précédentes, **caractérisé en ce que** le dispositif de mesure (1) est muni d'un moyen de chauffage comportant au moins un élément chauffant (3), au moins un élément chauffant (3) étant associé à chaque groupe de capteurs de température (2), un élément chauffant (3) étant associé à chaque capteur de température (2), chaque capteur de température (2) ayant son propre élément chauffant (3) et/ou le nombre d'éléments chauffants (3) du moyen de chauffage étant indépendant de celui des capteurs de température (2).

8. Dispositif de mesure selon la revendication 7, lorsqu'elle rapporte à la revendication 2, **caractérisé en ce que** les éléments chauffants (3) du moyen de chauffage sont disposés sur le même substrat flexible que les capteurs de température (2) ou les éléments chauffants (3) et les capteurs de température (2) sont disposés sur différents substrats flexibles qui sont reliés au composant (5) lors de sa fabrication.

9. Dispositif de mesure selon la revendication 7 ou 8, le moyen de chauffage pourvu d'au moins un élément chauffant (3) et la pluralité de capteurs de température (2), en particulier le réseau de capteurs (9), étant disposés sur un côté commun ou une surface commune du composant (5).

10. Dispositif de mesure selon la revendication 7 ou 8, le moyen de chauffage pourvu d'au moins un élément chauffant (3) et la pluralité de capteurs de température (2), en particulier le réseau de capteurs (9), étant disposés sur des côtés différents ou des surfaces différentes.

11. Dispositif de mesure selon l'une des revendications précédentes, **caractérisé en ce que** le dispositif de mesure (1) est muni d'un moyen de commande et d'évaluation.

12. Dispositif de mesure selon la revendication 11, lorsqu'elle rapporte à la revendication 2, **caractérisé en ce que** le moyen de commande et d'évaluation du dispositif de mesure (1) est intégré au substrat flexible.

13. Dispositif de mesure selon l'une des revendications 7 à 12, **caractérisé en ce que** les éléments chauffants (3) du moyen de chauffage sont conçus comme des micro-éléments chauffants.

14. Dispositif de mesure selon l'une des revendications précédentes, **caractérisé en ce que** les capteurs de température (2) sont utilisés ou peuvent être utilisés comme élément chauffant.

15. Dispositif de mesure selon l'une des revendications précédentes, **caractérisé en ce que** la matière synthétique renforcée par des fibres est une matière synthétique thermoplastique à haute performance qui est formée d'un polyimide, en particulier de polyétherimide, ou d'une polysulfone, en particulier de polyéthersulfone.

16. Dispositif de mesure selon l'une des revendications précédentes, **caractérisé en ce qu'**au moins un, plusieurs ou tous les capteurs de température (2) et/ou au moins un, plusieurs ou tous les éléments chauffants (3) sont chacun réalisés en polymère conducteur et/ou le substrat flexible respectif (6, 7) et/ou un autre film porteur est dopé différemment ou traité autrement.

17. Utilisation d'un dispositif de mesure (1) selon l'une des revendications 7 à 10, **caractérisée en ce que** les éléments chauffants (3) du moyen de chauffage sont utilisés, quelle que soit leur conception, en plus de l'antigivrage lors du fonctionnement du composant (5).
